# EUROPEAN PATENT SPECIFICATION

(11) **EP 0 432 545 B1**
(45) Date of publication and mention of the grant of the patent: **09.08.1995**
(21) Application number: 90122406.3
(22) Date of filing: 23.11.1990
(51) Int. Cl.: F27D 23/04, B01F 5/02, C22B 9/02

(54) **Molten metal stirring device**
Rührwerk für Metallschmelzen
Dispositif pour remuer un métal liquide

(30) Priority: 15.12.1989 JP 325481/89; 19.04.1990 JP 42064/90 U
(43) Date of publication of application: 19.06.1991
(73) Proprietor: SUMITOMO LIGHT METAL INDUSTRIES, LTD., Minato-ku Tokyo (JP)
(72) Inventor: Yoshida, Tutomu, Sakata-City Yamagata (JP); Inoue, Toshinori, Sakata-City Yamagata (JP); Shirasawa, Toshihiko, Sakata-City Yamagata (JP); Asahina, Takashi, Tsuruoka-City Yamagata (JP)
(74) Representative: Marx, Lothar, Dr.

(56) References cited:
- WO-A-80/00364
- DE-A- 1 816 038
- FR-A- 2 398 806
- GB-A- 2 039 761

## Description

### FIELD OF THE INVENTION

This invention relates to a device to stir molten metal, especially molten aluminum. Specifically, this invention relates to a molten metal stirring device whereby a stirring tube is inserted into an insertion hole located in the wall of a melting furnace and then repeatedly sucks up and blows down the molten metal in the furnace.

### BACKGROUND ART

Several stirring devices for molten metal have been introduced previously. The Japanese Patent Kokai No. 52-153802 describes the structure of a stirring device in which a stirring tube penetrates through the upper part of a side wall of a melting furnace at an inclination ranging from 25 to 60 degrees. The stirring tube is fixed against the wall. The Japanese Patent Kokai No. 58-185730 describes a structure in which a riser tube is connected to an opening in the lower part of a side wall of a melting furnace.

These devices are, however, designed with fixed stirring tubes which present various troubles in its operating process. Regarding the structure of Japanese Patent Kokai No. 52-153802, solid metal charges collide with the stirring tube to damage the tip of the tube, and the high speed hot stream of the melting metal degrades the durability of the stirring tube. Furthermore, the protrusion of the stirring tube into the melting furnace hinders efficient skimming operations. For the structure of Japanese Patent Kokai No. 58-185730, the repeated melt discharge operations promotes the deposition of scum at the inlet of the opening connected to the riser tube, which then blocks the opening and results in the shut down of furnace operation.

To resolve these problems, the inventors of this invention previously presented an improved stirring device which is described in detail in Japanese Utility Model Kokai No. 63-95099. In the improved device, a stirring tube passes through an insertion hole in the side wall of a furnace, then the stirring tube is angled using a tilting device to allow the tip of the stirring tube dip into the molten metal. This improved device, however, allows a large quantity of heat to dissipate through the insertion opening which is unavoidably enlarged to secure sufficient room for the tilting motion of the stirring tube. In addition, since the improved device is provided with a stationary structure to mount the stirring device next to a melting furnace, every melting furnace required its own exclusive stirring device. For factories operating more than one melting furnace, this pairing of furnace and stirring equipment raises the costs of plant investment and hinders efficient use of space. Another remaining problem concerned the function of stirring tube insertion adjustment to respond to the various types of furnace wall shapes or to the scum conditions inside the furnace.

Furthermore, GB-A-2 039 761 discloses a method and an apparatus for stirring molten metal in a furnace. This preknown apparatus comprises a portion of metal which is alternately withdrawn upwardly from beneath the surface of the body of molten metal and expelled into a lower region thereof through a stirrer tube which is mounted for axial reciprocation and angular swinging to thereby enable the submerged jet of expelled metal to be projected in a fan-like fashion within the limits of an angle corresponding to the dimensions of the furnace, thus providing for effective stirring of the entire body of molten metal. Stepwise reciprocation of the tube is effected by means of a pneumatic positioning device. The frequency of the metal-expelling cycles is varied during the operating process.

Referring to Figure 4 of this document it can be seen that this preknown stirring device for molten metal comprises a stirring tube insertion hole located on the sidewall of a melting furnace and penetrating through the wall at a downward inclination from the outside to the inside of the wall. Furthermore a support device installed at the outside of the furnace has an inserting mechanism to insert the stirring tube into the stirring tube insertion hole.

This preknown stirring tube cannot be withdrawn in its entirety from the stirring tube insertion hole. Furthermore, this preknown apparatus does not contain a closure which is closed when the stirring tube is withdrawn entirely from the stirring tube insertion hole.

Another molten metal stirring device is known from DE-A-1 816 038 and comprises a stirring tube insertion hole located on the side wall of a melting furnace and penetrating through the wall at a downward inclination from the outside to the inside of the wall. Furthermore a stirring tube stirs the molten metal in the furnace; and a support device installed in the outside of the furnace has a tilting mechanism to tilt the stirring tube to the stirring tube insertion hole.

### SUMMARY OF THE INVENTION

This invention is presented to solve the above described problems pertaining to conventional technologies. One object of this invention is to present a molten metal stirring device having a stirring tube which is inserted into the melting furnace only when the stirring of molten metal is required, and which does not inhibit skimming work, and which offers improved energy saving efficiency.

These objects are achieved by the features of claim 1. Suitable embodiments are defined by the features of the subclaims.

A gate which can be arbitrarily opened and closed is provided at the inlet of the stirring tube insertion hole. A nozzle-shaped stirring tube to stir the molten metal in the melting furnace is provided, and a support structure comprising a tilting and inserting mechanism to tilt and insert the stirring tube into the stirring tube insertion hole is included in the design of the device and is installed on the outside of the melting furnace. Since the stirring device allows the stirring tube to be inserted into the furnace at an angle, the insertion opening is not necessarily enlarged, so heat dissipation from the furnace is effectively prevented.

Another objective of this invention is to present a transportable stirring device which includes a mechanism to set a detachable stirring tube into the furnace at an angle using the above described tilting mechanism, and which gives freedom of flexible movement at the tip of the stirring tube, and which allows easy transport of the whole device.

This objective is achieved by the transportable molten metal stirring device in which a stirring tube is mounted on a support frame connected with a tilting mechanism via a support roll, and in which the tail end of the stirring tube is supported at a cantilever support point which moves along the stirring tube axis driven by a mechanism having a positioning feature, and in which these mechanisms and operating units are mounted on a transportable base. Since the design of the equipment includes a mechanism whereby the stirring tube is placed on the support frame via a support roll under the condition that the stirring tube is supported at a cantilevered support point on the tail end part, and at the same time, since the above described support point moves along the stirring tube axis under the control of a positioning mechanism, the tip of the stirring tube which is inserted at an angle obtains an inclined angle and has freedom of axial movement. Consequently, when the tip of the stirring tube comes in contact with some of the slug deposited on the furnace wall or a deformed part of the wall surface, the flexible properties of the stirring tube prevents the generation of excess contact pressure and prevents possible failure on the tip of the stirring tube. In addition, when the hearth depth varies or the dipping position of a stirring tube changes, the positioning mechanism guides the stirring tube to the desired site. Furthermore, all components and operation units are mounted on a transportable base, so one stirring device can handle several melting furnaces simply by moving the device to the side of a furnace which is ready to start stirring operations. This system significantly improves the operating efficiency of a melting plant.

### BRIEF DESCRIPTION OF THE DRAWINGS

Fig. 1 shows a sectional side view of an example of the molten metal stirring device of this invention.

Fig. 2 shows a sectional plan view of the stirring device of this invention illustrating the stirring state within the melting furnace.

Fig. 3 (a) and (b) are graphs showing the uniformity of temperature of molten metal and the alloy composition of this invention.

Fig. 4 shows a sectional side view of the molten metal stirring device with a transportable structure of this invention.

Fig. 5 is a bird's eye view of the stirring device of Fig. 4.

Fig. 6 is a bird's eye view of the device of Fig. 4 with tilted position of the stirring tube.

Fig. 7 is a schematic sectional view of the device of Fig. 4, the stirring tube of which is tilted and set in the melting furnace.

### DETAILED DESCRIPTION OF THE PREFERRED EMBODIMENT

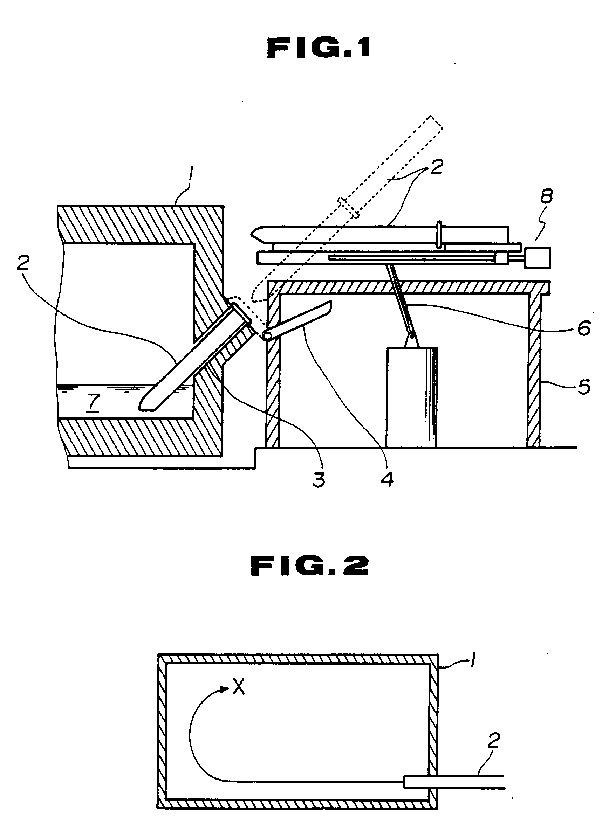

Refer to Fig. 1. The furnace wall 1 has an inclined insertion hole 3 which is opened to insert a nozzle-shaped stirring tube 2 downwardly from the outside hole opening. The opening of the insertion hole 3 is provided with a closure 4 which can be freely opened and closed. The closure 4 is attached to the opening of the insertion hole 3 by an adequate means, such as a hinge, and the opening of the insertion hole 3 is closed when the stirring tube 2 is not inserted into the furnace.

The stirring tube 2 is mounted on the support device 5. The support device 5 is provided with a tilting mechanism 6 which consists of a cylinder to tilt the stirring tube 2, as illustrated in Fig. 1 with a dotted line, and other components, and also is provided with an insertion mechanism 8 which feeds the tilted stirring tube 2 toward the insertion hole 3 and dips the tip of the stirring tube 2 through the insertion hole 3 into the molten metal 7 in the melting furnace. In this way, the support device 5 comprises a tilting and inserting mechanism. The tail end of the stirring tube is connected to a vacuum unit (not shown in Fig. 1) which enables the stirring of molten metal by alternatively sucking the molten metal into the stirring tube 2 and then by blowing it into the furnace using pressure.

To operate the stirring device of this invention, open the closure 4 at the opening of insertion hole 3, activate the tilting mechanism 6 on the support device 5 to tilt the stirring tube 2 as shown in Fig. 1 with the dotted line, insert the stirring tube 2 into the furnace through the insertion hole 3 using the insertion mechanism 8, then stop the insertion of the stirring tube 2 just before it dips into the molten metal 7.

At this point, preheat the stirring tube 2 to the atmospheric temperature within the furnace for an adequate period, then re-activate the insertion mechanism 8 to direct the tip (nozzle part) of the stirring tube 2 forward into the molten metal 7. Actuate the vacuum unit to perform the suction and blow-down operation of the stirring tube 2 to carry out the stirring of molten metal 7. After the completion of the stirring operation, raise the tip of the stirring tube 2 from the surface of molten metal 7 using the insertion mechanism 8. Allow the raised stirring tube 2 to stand and let the molten metal remaining in the stirring tube 2 to completely drain out. After the draining operation, actuate the insertion mechanism 8 to draw out the stirring tube 2 from the insertion hole 3, and return the stirring tube 2 to the starting horizontal position using the tilting mechanism 6. Finally, close the closure 4 at the opening of insertion hole 3.

As illustrated above, the stirring device of this invention inserts the stirring tube into the furnace only when it is needed. Thus, the stirring device prolongs the life of the stirring tube, prevents the stirring tube from suffering damage during the charge of solid metals, and eliminates the presence of an obstructing tube in the skimming area during skimming work. In addition, the stirring device adopts a tilted stirring tube insertion hole on the furnace wall, obviating the need of an enlarged insertion hole and thereby preventing excess heat dissipation.

Following the above described stirring operation, when the stirring tube 2 is set up as shown in Fig. 2, the molten metal 7 sucked into and blow down from the stirring tube 2 produces a stirring flow along the direction marked by the arrow X in Fig. 2.

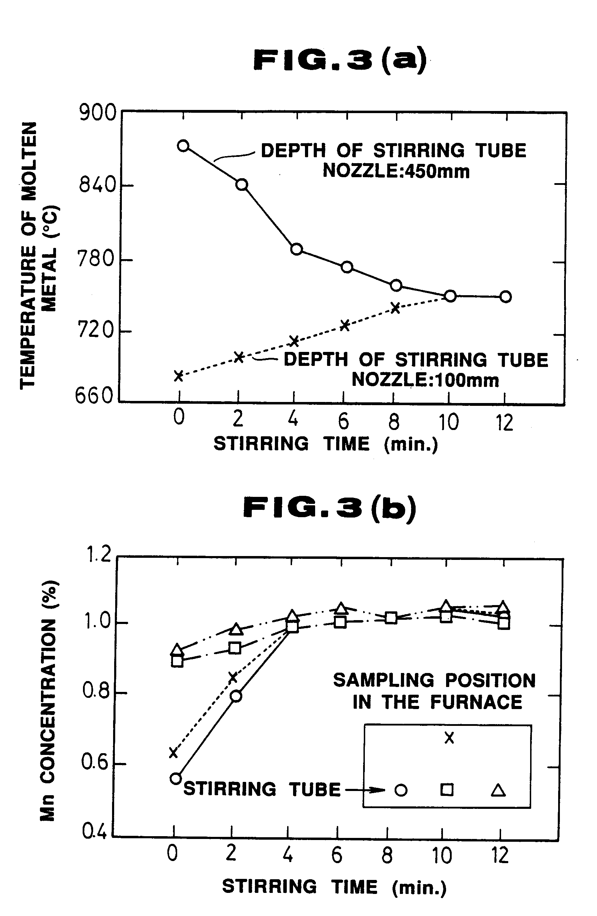

Fig. 3 (a) shows the relationship between stirring time and temperature of aluminum molten metal when it is stirred by the stirring device of this invention. The figure indicates that 100% aluminum molten metal is brought to a uniform temperature within approximately 10 min. Fig. 3 (b) shows the relationship between stirring time and concentration of manganese (Mn) in the aluminum molten metal.

The figure indicates that the alloy composition is brought into a uniform level within approximately 5 min. of stirring.

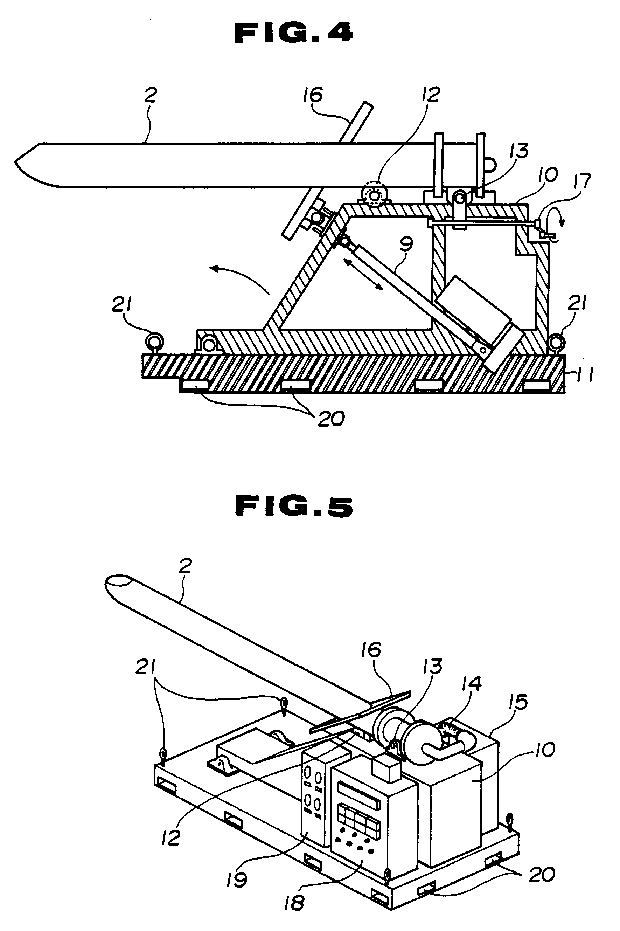

The stirring device shown in Figs.4 and 5 is transportable and has a different structure compared with the device shown in Fig. 1. The transportable device has a stirring tube 2, tilting mechanism 9, support frame 10, and base 11. The stirring tube 2 consists of a tube with sufficient length to dip its tip into the molten metal within the melting furnace and which is supported at the support point 13 of the tail end part. The stirring tube 2 is supported by the support roll 12 which is fixed on the support frame 10. The tail end of the stirring tube 2 is connected to the suction unit 15 via the bellowstube 14. The stirring tube 2 is provided with a collar 16 which covers and closes the opening of the insertion hole 3 when the stirring tube 2 is inserted into the furnace at a tilted angle. Therefore, the structure shown in Figs. 4 and 5 does not require the opening of an inclined insertion hole on the furnace wall, the design of a narrow passage for the stirring tube, nor the installation of an open/close closure on the insertion hole.

The support unit at the cantilever support point 13 is linked up to the positioning mechanism 17 which moves along the axis of the stirring tube 2. Fig. 4 illustrates the screw mechanism driven by a hand wheel for the positioning mechanism 17. However, the driving mechanism for the positioning feature need not be limited to the configuration shown in the figure, as other mechanisms, such as power drive unit, can be used.

The tilting mechanism 9 consists of a free-expansion device, such as power cylinder, and functions to tilt the stirring tube 2 at a specified angle by pushing up the support frame 10 connected to the free-expansion device.

Other than the above described stirring tube 2, tilting mechanism 9, and support frame 10, all of the necessary operation units, including the suction unit 15, control panel 18, and instruments 19, are installed on the base 11. Also, the terminals for wiring and piping to connect with the power source and gas supply source are mounted on the base 11.

The base 11 is designed to be transportable by having fork slots 20 attached to the bottom for a fork-lift and hooks 21 on the top for a crane.

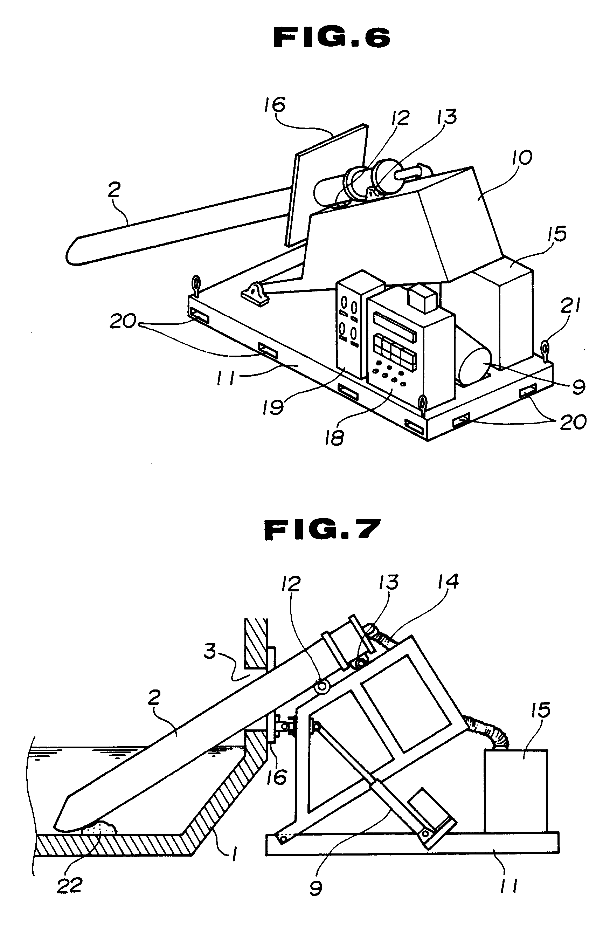

When the stirring tube 2 at the position shown in Fig. 4 is tilted by actuating the tilting mechanism 9, the position of the stirring tube 2 changes to that shown in Fig. 6. Fig. 7 illustrates the inserted stirring tube 2, which was preliminarily tilted as shown in Fig. 6. To insert the necessary length of the stirring tube 2 into the furnace, lift the base 11 using a fork-lift or crane and insert the stirring tube 2 into the insertion hole 3, then put the base 11 onto the floor. When some slag 22 is deposited on the hearth, the tip of the inserted stirring tube 2 naturally moves without resistance to avoid excess contact pressure. Since the positioning mechanism 17 allows the stirring tube 2 to move axially , it adjusts the distance between the hearth surface and the tip of the stirring tube 2 and also allows the tip to avoid contact with the slag 22.

After the completion of stirring operation using the repeated suction and blown down cycles of the stirring tube 2, draw off the stirring tube 2 from the furnace and return the stirring device to the starting position shown in Fig. 4 by reversing the steps to the above described setting procedure. Then move the stirring equipment to the next furnace for further stirring operations.

To insert the necessary length of the stirring tube 2 into the furnace, methods other than the transfer of base 11 may be used. For example, the axial movement range of the stirring tube 2 driven by the positioning mechanism 17 can be widened, or an insertion mechanism different from the positioning mechanism 17 can be added between the support frame 10 and the stirring tube 2 to perform the insertion of the stirring tube 2 into the furnace using either the positioning mechanism 17 or the newly-added insertion mechanism. These alternative mechanism allow the insertion of the stirring tube 2 after tilting it, so a stirring device having these mechanisms can also be applied to a furnace which has an inclined insertion hole 3.

As described above, the structure shown in Fig. 4 includes mechanisms which can detachably insert, tilt and set a stirring tube using the positioning mechanism for the whole equipment device as a tilting function. With these advantageous mechanisms, the stirring equipment having the structure shown in Fig. 4 assures plant stirring operation of molten metal at a high rate supported by optimum operating conditions and efficient furnace use.

## Claims

1. A molten metal stirring device comprising a stirring tube insertion hole (3) located on the side wall (1) of a melting furnace and penetrating through the wall (1) at a downward inclination from the outside to the inside of the wall (1), a stirring tube (2) to stir the molten metal (7) in the furnace and a support device (5), installed at the outside of the furnace and having an inserting mechanism (8) to insert the stirring tube (2) into the stirring tube insertion hole (3),
**characterized in that**
the inserting mechanism (8) is provided with a tilting mechanism (6,9) to tilt the stirring tube (2), that the stirring tube (2) can be withdrawn in its entirety from the stirring tube insertion hole (3), that
the stirring tube insertion hole (3) can be closed with a closure (4) when the tube (2) is withdrawn from the hole (3), that
the closure (4) is closed when the stirring tube (2) is withdrawn entirely from the stirring tube insertion hole (3), and that
the stirring tube (2) comprises a nozzle.

2. A molten metal stirring device of claim 1, wherein the tilting and insertion mechanism comprises a cylinder to tilt the stirring tube (2) and an insertion mechanism to move the tilted stirring tube (2) along the tube axis.

3. A molten metal stirring device of claim 1 or 2, wherein the tail end of the stirring tube (2) is connected to a vacuum device which allows the stirring tube (2) to repeatedly suck up the molten metal (7) and blow it into the furnace.

4. A molten metal stirring device of claim 1 to 3, wherein said tilting mechanism (9) is connected to a support frame (10) having a support roll (12) supporting the tail end of said stirring tube (2) at a cantilever support point, and having a positioning mechanism (17) to move said stirring tube (2) along the axis of said stirring tube (2), and wherein said mechanism and its operation means are mounted on a transportable base (11).

5. A molten metal stirring device of claim 1 to 4, wherein a collar (16) is attached to the stirring tube (2) to close the stirring tube insertion hole (3) on the furnace wall (1).

6. A molten metal stirring device of claim 1 to 5, wherein the tail end of the stirring tube (2) is connected to a suction unit (15) via a bellows tube (14).

7. A molten metal stirring device of claim 1, 5 and 6, wherein the tilting mechanism (9) comprises a free-expansion device, such as a power cylinder, to push up the support frame (10) to tilt the stirring tube (2) at an arbitrary inclination.

8. A molten metal stirring device of claim 1 to 7, wherein attachments (20) for a fork-lifter and/or a hook (21) for a crane is provided on the base (11).

## Patentansprüche

1. Rührvorrichtung für geschmolzenes Metall mit einem Einsetzloch (3) für ein Rührrohr, das an der Seitenwand (1) eines Schmelzofens angeordnet ist, und mit nach unten gerichteter Neigung von der Außenseite zur Innenseite der Wand (1) durch die Wand (1) hindurchgeht, einem Rührrohr (2) zum Rühren des geschmolzenen Metalls (7) im Ofen und einer Trägervorrichtung (5), die an der Außenseite des Ofens angebracht ist und einen Einsetzmechanismus (8) zum Einsetzen des Rührrohrs (2) in das Einsetzloch (3) für das Rührrohr hat,
**dadurch gekennzeichnet,** daß
- der Einsetzmechanismus (8) mit einem Kippmechanismus (6, 9) zum Neigen des Rührrohrs (2) versehen ist, daß
- das Rührrohr (2) zur Gänze aus dem Einsetzloch (3) für das Rührrohr herausgezogen werden kann, daß
- das Einsetzloch (3) für das Rührrohr mit einem Deckel (4) verschlossen werden kann, wenn das Rohr (2) aus dem Loch (3) herausgezogen wird, daß
- der Verschluß (4) verschlossen wird, wenn das Rührrohr (2) zur Gänze aus dem Einsetzloch (3) für das Rührrohr herausgezogen wird, und daß
- das Rührrohr (2) eine Düse aufweist.

2. Rührvorrichtung für geschmolzenes Metall nach Anspruch 1, bei der die Kipp- und Einsetzmechanismen einen Zylinder zum Neigen des Rührrohrs (2) und einen Einsetzmechanismus zum Bewegen des geneigten Rührrohrs (2) entlang der Achse des Rohrs aufweisen.

3. Rührvorrichtung für geschmolzenes Metall nach Anspruch 1 oder 2, bei dem das hintere Ende des Rührrohrs (2) mit einer Unterdruckvorrichtung verbunden ist, welche es dem Rührrohr (2) gestattet, wiederholt das geschmolzene Metall (7) anzusaugen und in den Ofen zu blasen.

4. Rührvorrichtung für geschmolzenes Metall nach einem der Ansprüche 1 bis 3, bei der der Kippmechanismus (9) mit einem Trägerrahmen (10) verbunden ist, der eine Trägerwalze (12) aufweist, welche das hintere Ende des Rührrohrs (2) an einem freitragenden Unterstützungspunkt trägt, und einen Positionierungsmechanismus (17) zur Bewegung des Rührrohrs (2) entlang der Achse des Rührrohrs (2) aufweist, und wobei der Mechanismus und seine Betätigungseinrichtungen auf einer transportierbaren Basis (11) angeordnet sind.

5. Rührvorrichtung für geschmolzenes Metall nach einem der Ansprüche 1 bis 4, bei der ein Kragen (16) an dem Rührrohr (2) befestigt ist, um das Einsetzloch (3) für das Rührrohr an der Ofenwand (1) zu verschließen.

6. Rührvorrichtung für geschmolzenes Metall nach einem der Ansprüche 1 bis 5, bei der das hintere Ende des Rührrohrs (2) über ein Faltenbalgrohr (14) mit einer Ansaugeinheit (5) verbunden ist.

7. Rührvorrichtung für geschmolzenes Metall nach einem der Ansprüche 1, 5 oder 6, bei der der Kippmechanismus (9) eine Vorrichtung aufweist, die sich frei ausdehnen kann, wie z.B. einen mechanisch oder elektrisch getriebenen Zylinder, um den Trägerrahmen (10) nach oben zu schieben und das Rührrohr (2) zu einer beliebigen Neigung zu neigen.

8. Rührvorrichtung für geschmolzenes Metall nach einem der Ansprüche 1 bis 7, bei der Befestigungen (20) für einen Gabelstapler und/oder ein Haken (21) für einen Kran auf der Basis 11 vorgesehen sind.

## Revendications

1. Dispositif d'agitation de métal fondu, comportant un trou (3) d'insertion de tube d'agitation disposé sur la paroi latérale (1) d'un four de fusion et pénétrant à travers la paroi (1) selon une inclinaison dirigée vers le bas, de l'extérieur à l'intérieur de la paroi (1), un tube d'agitation (2) pour agiter le métal fondu (7) dans le four, et un dispositif de support (5), installé à l'extérieur du four et comportant un mécanisme d'insertion (8) pour insérer le tube d'agitation (2) dans le trou (3) d'insertion de tube d'agitation,
caractérisé en ce que :
le mécanisme d'insertion (8) est muni d'un mécanisme d'inclinaison (6, 9) pour incliner le tube d'agitation (2),
le tube d'agitation (2) peut être retiré dans sa totalité du trou (3) d'insertion de tube d'agitation,
le trou (3) d'insertion de tube d'agitation peut être fermé par un organe de fermeture (4) lorsque le tube (2) est retiré du trou (3),
l'organe de fermeture (4) est fermé lorsque le tube d'agitation (2) est entièrement retiré du trou (3) d'insertion de tube d'agitation,
le tube d'agitation (2) comporte une buse.

2. Dispositif d'agitation de métal fondu selon la revendication 1, dans lequel le mécanisme d'inclinaison et d'insertion comporte un cylindre pour incliner le tube d'agitation (2) et un mécanisme d'insertion pour déplacer le tube d'agitation incliné (2) le long de l'axe du tube.

3. Dispositif d'agitation de métal fondu selon la revendication 1 ou 2, dans lequel l'extrémité de queue du tube d'agitation (2) est connectée à un dispositif à vide qui permet au tube d'agitation (2) d'aspirer le métal fondu (7) et de le souffler dans le four, et ce de façon répétée.

4. Dispositif d'agitation de métal fondu selon les revendications 1 à 3, dans lequel ledit mécanisme d'inclinaison (9) est connecté à une structure de support (10) comportant un rouleau de support (12) supportant l'extrémité de queue dudit tube d'agitation (2) au niveau d'un point de support en porte-à-faux, et comportant un mécanisme de positionnement (17) pour déplacer ledit tube d'agitation (2) le long de l'axe dudit tube d'agitation (2), et dans lequel ledit mécanisme et ses moyens d'actionnement sont montés sur une base transportable (11).

5. Dispositif d'agitation de métal fondu selon les revendications 1 à 4, dans lequel un collier (16) est fixé au tube d'agitation (2) de façon à fermer le trou (3) d'insertion de tube d'agitation sur la paroi (1) du four.

6. Dispositif d'agitation de métal fondu selon les revendications 1 à 5, dans lequel l'extrémité de queue du tube d'agitation (2) est connectée à une unité d'aspiration (15) par l'intermédiaire d'un tube à soufflet (14).

7. Dispositif d'agitation de métal fondu selon les revendications 1, 5 et 6, dans lequel le mécanisme d'agitation (9) comporte un dispositif à extension libre, tel qu'un vérin, pour pousser vers le haut la structure de support (10) afin d'incliner le tube d'inclinaison (2) selon une inclinaison arbitraire.

8. Dispositif d'agitation de métal fondu selon les revendications 1 à 7, dans lequel des organes de fixation (20) pour un chariot à fourche et/ou un crochet (21) pour une grue sont disposés sur la base (11).
